# EUROPEAN PATENT APPLICATION

(11) **EP 1 102 298 A1**
(43) Date of publication of application: **23.05.2001**
(21) Application number: 00309088.3
(22) Date of filing: 16.10.2000
(51) Int. Cl.: H01J 1/30, H01J 29/46, H01J 9/02

(54) **Field emission display device using vertically-aligned carbon nanotubes and manufacturing method thereof**

(30) Priority: 05.11.1999 KR 9949018; 31.05.2000 KR 0029580
(71) Applicant: Iljin Nanotech Co., Ltd., Seoul (KR); Lee, Cheol-jin, Gunsan-city, Jeonlabuk-do (KR)
(72) Inventor: Lee, Cheol-jin, Gunsan-city, Jeonlabuk-do (KR); Yoo, Jae-eun, Seongbuk-gu, Seoul (KR)
(74) Representative: Stuttard, Garry Philip

(57) **Abstract**

A field emission display (FED) device using vertically-aligned carbon nanotubes is provided. In this FED device, a metal film (32) for use as a cathode is formed on a lower substrate (30), and vertically-aligned carbon nanotubes (34) for use as emitter tips are formed on the metal film (32). Here, the carbon nanotubes for use as emitter tips are obtained by vertically growing on catalytic metal particles by chemical vapor deposition after the catalytic metal particles are formed on the metal film. A spacer (36) is installed on the metal film (32), and an upper substrate (50), to which a transparent electrode and a fluorescent layer are attached, is formed on the spacer (36).

## Description

### BACKGROUND OF THE INVENTION

### 1. Field of the Invention

The present invention relates to a field emission display (FED) device and a manufacturing method thereof, and more particularly, to an FED device using vertically-aligned carbon nanotubes, and a manufacturing method thereof.

### 2. Description of the Related Art

In general FED devices, when a positive voltage of several hundreds of volts is applied from an external gate electrode to a conic emitter tip, electrons are emitted from the emitter tip affected by a strong electric field, and the emitted electrons collide with an anode to which several to several hundreds of kilovolts are applied, and with an anode coated with a fluorescent material. In this way, the FED devices perform a display function. However, in conventional FED devices using silicon emitter tips made by etching a silicon substrate, an anode and a cathode must be separated from each other by a fine interval of about 1.0 to 1.5µm. Also, in conventional FED devices, leakage current is high, the reliability and performance are not high, and a manufacturing yield is low, due to a deterioration of silicon tips caused by application of significantly high operating voltage and emission of high current. An FED device using carbon nanotubes has been proposed as an improvement of FED devices using silicon tips.

Conventional carbon nanotubes are synthesized by electrical discharging or laser deposition, and put in a cleansing solution and shaken by an ultrasonic washer to be purified. The purified carbon nanotubes are implanted into the pores of a porous ceramic filter to be used in an FED device. Then, the carbon nanotubes contained in the pores of the porous ceramic filter are stamped and stood upright on conductive polymer on a lower substrate for an FED device, thereby forming emitter tips.

The FED device using conventional nanotubes as emitter tips excels in stability compared to an FED device using silicon tips. However, the FED device using conventional carbon nanotubes has a difficulty in efficiently standing carbon nanotubes on the conductive polymer, and its manufacturing method is complicated. Thus, the FED device using conventional carbon nanotubes has a low manufacturing yield, and cannot be manufactured to have a large area. Also, an electrically perfect interconnection is not made between the conductive polymer and carbon nanotubes on a substrate.

### SUMMARY OF THE INVENTION

To solve the above problems, an object of the present invention is to provide a field emission display (FED) device using carbon nanotubes, which can be manufactured to have a large area, and which has a high density of emitter tips per unit area.

Another object of the present invention is to provide a method of manufacturing an FED device to have a large area by a simple manufacturing process.

The first object of the present invention is achieved by a field emission display device in which a metal film for use as a cathode is formed on a lower substrate, and vertically-aligned carbon nanotubes for use as emitter tips are formed on the metal film. Here, the carbon nanotubes for use as emitter tips are obtained by vertically growing on catalytic metal particles by chemical vapor deposition after the catalytic metal particles are formed on the metal film. A spacer is installed on the metal film, and an upper substrate, to which a transparent electrode and a fluorescent layer are attached, is formed on the spacer.

The second object of the present invention is achieved by a method of manufacturing a field emission display device, in which a metal film for use as a cathode is formed on a lower substrate, and carbon nanotubes are vertically aligned and grown on the metal film. The vertically-aligned and grown carbon nanotubes are obtained by forming a catalytic metal film on the metal film, forming isolated nano-sized catalytic metal particles by etching the surface of the catalytic metal film, and vertically growing a carbon nanotube on each of the isolated catalytic metal particles using a chemical vapor deposition method using a carbon source gas. A thermal chemical vapor deposition method or a plasma enhanced chemical vapor deposition method can be used to form the catalytic metal particles and to grow carbon nanotubes. The carbon source gas can be an acetylene gas, an ethylene gas, a propylene gas, a propane gas or a methane gas. The surface of the catalytic metal film can be etched by an ammonia gas, a hydrogen gas or a hydride gas, or by a hydrogen fluoride solution. The catalytic metal film can be formed of cobalt, nickel, iron, yttrium or an alloy of two or more of these metals. Thereafter, a spacer is installed on the metal film, and then an upper substrate, to which a transparent electrode and a fluorescent layer are attached, is installed on the spacer. In this way, formation of the FED device is completed.

An FED device using vertically-aligned carbon nanotubes according to the present invention can have a high manufacturing yield and can be manufactured to have a large area, since it has a simple two-electrode structure. Also, the use of carbon nanotubes vertically aligned well as emitter tips makes it possible to obtain a large amount of emission current at a low operating voltage.

### BRIEF DESCRIPTION OF THE DRAWINGS

The above objectives and advantages of the present invention will become more apparent by describing in detail a preferred embodiment thereof with reference to the attached drawings in which:
FIG. 1 is a cross-sectional view of a field emission display (FED) device using vertically-aligned carbon nanotubes according to the present invention;
FIGS. 2 and 3 are cross-sectional views illustrating a method of manufacturing the FED device of FIG. 1;
FIGS. 4A through 4C are cross-sectional views illustrating a method of growing the carbon nanotubes of FIG. 3;
FIG. 5 is a schematic view of a thermal chemical vapor deposition apparatus used to grow the carbon nanotubes of FIG. 3; and
FIG. 6 is a view illustrating a mechanism of carbon nanotubes growing on isolated catalytic metal particles according to the present invention.

### DESCRIPTION OF THE PREFERRED EMBODIMENT

Hereinafter, an embodiment of the present invention will be described in detail with reference to the attached drawings. However, the embodiment of the present invention can be modified into various other forms, and the scope of the present invention must not be interpreted as being restricted to the described embodiment. This embodiment is provided to more completely explain the present invention to those skilled in the art. In the drawings) the thicknesses or sizes of layers or regions are exaggerated for clarity. Like reference numerals in the drawings denote the same members. Also, when it is written that a layer is formed "on" another layer or a substrate, the layer can be formed directly on the other layer or the substrate, or other layers can intervene therebetween.

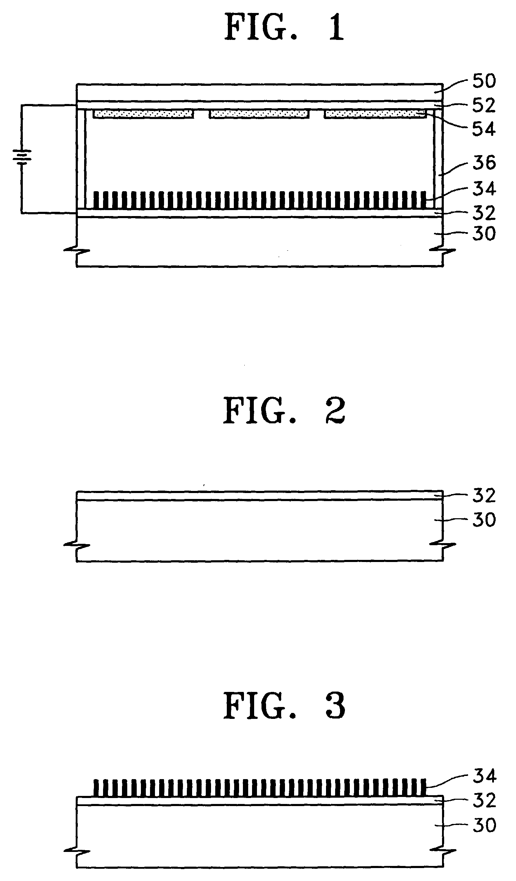

Referring to FIG. 1, a field emission display (FED) device using vertically-aligned carbon nanotubes according to the present invention has a metal film 32 for use as a cathode formed on a lower substrate 30. The lower substrate 30 is formed of glass, quartz, silicon or alumina (Al₂O₃). The metal film 32 is formed of chrome, titanium, tungsten or aluminum. Vertically-aligned carbon nanotubes 34 are formed on the metal film 32 to serve as emitter tips. The vertically-aligned carbon nanotubes 34 can obtain a great amount of emission current at a low operating voltage, for example, at 3V/µm or less. Also, the vertically-aligned carbon nanotubes 34 can generate high luminous efficiency since they have a high density of tips per unit area. A spacer 36 is formed on the metal film 32. An upper substrate 50, to which a transparent electrode 52 and a fluorescent layer 54 are attached, is provided on the spacer 36.

In the FED device having such a structure, an electric field is applied between the metal film 32 serving as a cathode and the transparent electrode 52 serving as an anode, so that electrons are emitted from the vertically-aligned carbon nanotubes 34. The emitted electrons collide with the fluorescent layer 54, so that the FED device having such a structure emits red, green and blue light. Consequently, the FED device according to the present invention is a two-electrode FED device.

FIGS. 2 and 3 are cross-sectional views illustrating a method of manufacturing the FED device of FIG. 1. Referring to FIG. 2, the metal film 32 serving as a cathode is formed to a thickness of 0.2 to 0.5 µm on the wide lower substrate 30. The lower substrate 30 is formed of glass, quartz, silicon or alumina (Al₂O₃). The metal film 32 is formed of chrome, titanium, tungsten or aluminum.

Referring to FIG. 3, carbon nanotubes 34 are vertically aligned and grown on the metal film 32. To be more specific, a catalytic metal film (not shown) is formed on the metal film 32, and then independently-isolated nano-sized catalytic metal particles (not shown) are formed by etching the surface of the catalytic metal film using a dry or wet etching method. Thereafter, a plurality of carbon nanotubes 34 are vertically grown on the catalytic metal particles by thermal chemical vapor deposition or plasma enhanced chemical vapor deposition. The carbon nanotubes can be grown by patterning the metal film 32 and a catalytic metal film in a fine line pattern and then etching the surface of the patterned catalytic metal film. The carbon nanotubes 34 are used as emitter tips, and can form several emitter tips per pixel, so that a great amount of emission current can be obtained at a low operating voltage. A method of vertically growing the carbon nanotubes 34 will be described in detail later.

Referring back to FIG. 1, a spacer 36 is formed on the metal film 32 to a thickness of 100 to 700 µm. After the transparent electrode 52 serving as an anode is formed on the upper substrate 50, a fluorescent layer 54, which emit light, are attached to the transparent electrode 52. The upper substrate 50 is formed of glass, and the transparent electrode can be an indium tin oxide (ITO) electrode. The fluorescent layer 54 is formed of three types of materials that emit red, green and blue light. Thereafter, the upper substrate 50, to which the transparent electrode 52 and the fluorescent layer 54 are attached, is turned upside down and put on the spacer 36, and then vacuum-sealed and mounted, thereby completing the formation of the FED device.

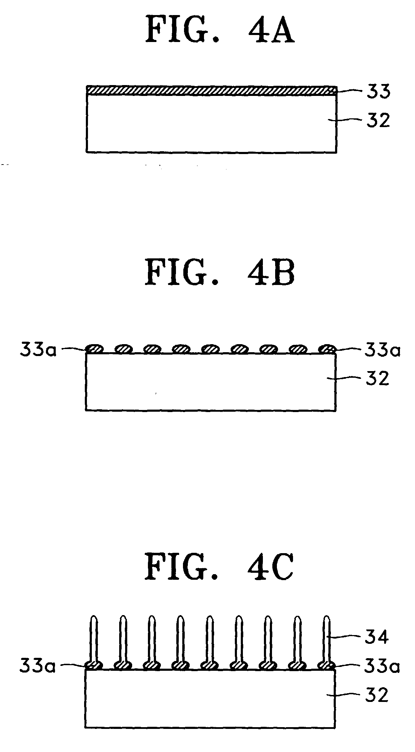

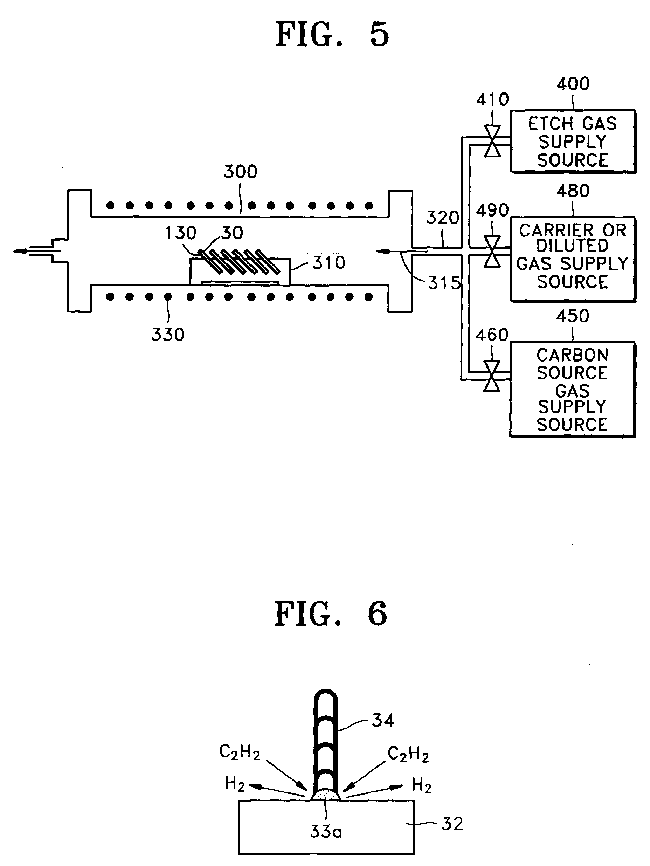

Hereinafter, a method of vertically growing carbon nanotubes will be described in detail with reference to FIGS. 4 through 6. FIGS. 4A through 4C are cross-sectional views for illustrating a method of growing the carbon nanotubes of FIG. 3. FIG. 5 is a schematic view of a thermal chemical vapor deposition apparatus used to grow the carbon nanotubes of FIG. 3. FIG. 6 is a view illustrating a mechanism of carbon nanotubes growing on isolated catalytic metal particles according to the present invention. FIGS. 4A through 4C show magnified drawings for ease of explanation.

The vertically-grown carbon nanotubes 34 of FIG. 3 are formed by three steps, as shown in FIGS. 4A through 4C. First, as shown in FIG. 4A, a catalytic metal film 33 is formed on the metal film 32. The catalytic metal film 33 is formed of cobalt, nickel, iron, yttrium, or an alloy of two or more materials among these materials (for example, cobalt-nickel, cobalt-iron, cobalt-yttrium, nickel-iron, cobalt-nickel-iron, or cobalt-nickel-yttrium). The catalytic metal film 33 is formed on a substrate 32 to a thickness of several to several hundreds of nm, preferably, to a thickness of 20 to 200nm, by thermal deposition, electron beam deposition or sputtering. Then, as shown in FIG. 4B, independently-isolated nano-sized catalytic metal particles 33a are formed by etching the surface of the catalytic metal film 33.

To be more specific, substrates 30, on each of which the metal film 32 and the catalytic metal film 33 are formed, are installed in parallel on a boat 310 of a thermal chemical vapor deposition apparatus, isolated a predetermined distance apart from each other. Then, the boat 310 having the substrates 30 is loaded into a reaction furnace 300 of the thermal chemical vapor deposition apparatus. Here, the boat 310 is loaded in a state where the surface 130 of the catalytic metal film 33 formed on each of the substrates 30 faces down in the direction opposite to a direction 315 of injection of an etch gas. After the boat 310 is loaded, the pressure within the reaction furnace 300 is set to be several hundreds of mTorr to several Torr, and the temperature within the reaction furnace 300 is increased to 700 to 1000 °C using a resistance coil 330 installed around the outer wall of the reaction furnace 300. When the temperature within the reaction furnace 300 reaches a process temperature, a first valve 410 is opened, and an etch gas is supplied from an etch gas supply source 400 to the reaction furnace 300 via a gas supply pipe 320. The etch gas can be an ammonia gas, a hydrogen gas, or a hydride gas, but the use of an ammonia gas as the etch gas is preferable. When an ammonia gas is used, it is supplied at a flow rate of 80 to 400 sccm for 10 to 30 minutes.

The etch gas supplied into the reaction furnace 300 etches the catalytic metal film 33 along the grain boundary, thereby densely and uniformly forming independently-isolated nano-sized catalytic metal particles 33a. The term nano size in this specification indicates a size of several to several hundreds of nm. The size and shape of isolated nano-sized catalytic metal particles 33a depend on etching conditions. The shape of carbon nanotubes 34 to be formed in a subsequent process is affected by the shape of the catalytic metal particles 33a. In this embodiment, the catalytic metal particles 33a are formed to a size of 200nm or smaller.

Thereafter, a carbon source gas is supplied to the thermal chemical vapor deposition apparatus to grow the carbon nanotubes 34, as shown in FIG. 4C. The step of growing the carbon nanotubes 34 and the step of forming the nano-sized catalytic metal particles 33a can be performed in situ. To be more specific, the first valve 410 of FIG. 5 is turned off to prevent the supply of an ammonia gas, and a second valve 460 is turned on to supply a carbon source gas from a carbon source gas supply source 450 to the reaction furnace 300 via the gas supply pipe 320. The temperature within the reaction furnace 300 must remain at 700 to 1000 °C, the temperature at which the isolated nano-sized catalytic metal particles 33a are formed. The carbon source gas is supplied at a flow rate of 20 to 200 sccm for 10 to 60 minutes. The carbon source gas provides carbon atoms, and can be any gas if it can be decomposed at a low temperature. Preferably, a hydrocarbon gas of C₁ to C₂₀ is used as the carbon source gas. More preferably, the carbon source gas can be an acetylene gas, an ethylene gas, a propylene gas, a propane gas or a methane gas.

In order to control the speed and time of growth of carbon nanotubes, a carrier gas (an inert gas such as hydrogen or argon gas) and/or a diluted gas (a hydride gas) can be supplied from a carrier or diluted gas supply source 480 to the reaction furnace 300 via a third valve 490 opened, together with a carbon source gas. Also, an etch gas (for example, an ammonia gas, a hydrogen gas or a hydride gas) can be supplied together with a carbon source gas in an appropriate ratio in order to control the density and growth shape of carbon nanotubes. Preferably, the volume ratio of a carbon source gas to an etch gas is 2:1 to 3:1.

As shown in FIG. 6, when a carbon source gas (for example, acetylene gas (C₂H₂)), which has been supplied into the reaction furnace 300 of the thermal chemical vapor deposition apparatus, is decomposed in a gas phase by pyrolysis, and forms free hydrogen (H₂) and carbon units (C=C or C), the carbon units are adsorbed and diffused into the surface of the catalytic metal particles 33a and then dissolved therein. When the carbon units are diffused into and accumulated within the catalytic metal particles 33a, carbon nanotubes 34 start growing. When carbon units are continuously supplied, the carbon nanotubes 34 are grown in bamboo shapes by the catalytic action of the catalytic metal particles 33a. When the catalytic metal particles 33a are round or blunt, the end of a carbon nanotube 34 is also round or blunt. Though not shown in the drawings, when the end of each nano-sized catalytic metal particle 33a is sharp-pointed, each carbon nanotube also has a sharp-pointed end.

In the present invention, catalytic metal particles 33a, which are suitable for the growth of carbon nanotubes 34, are independently isolated from other neighboring particles without being agglomerated therewith, so that no amorphous carbon agglomerates are formed during formation of carbon nanotubes. Hence, highly-pure carbon nanotubes 34 can be formed to be vertically aligned on a substrate 30. Also, the size of catalytic metal particles 33a can be controlled by changing the conditions of etching using an etch gas (that is, an ammonia gas). For example, the gas flow rate, the etching temperature and the etching time can be adjusted, so that the diameter of carbon nanotubes 34 can be easily controlled. Furthermore, the length of the carbon nanotubes 34 can also be easily controlled by changing the conditions of supply of a carbon source gas, for example, the gas flow rate, the etching temperature and the etching time.

In this embodiment, isolated nano-sized catalytic metal particles 33a are formed by dry etching using the thermal chemical vapor deposition apparatus of FIG. 5. However, the isolated nano-sized catalytic metal particles 33a can be formed by wet etching. That is, a substrate 30, on which a catalytic metal film 33 is formed, can be dipped into a wet etching solution, for example, a hydrogen fluoride (HF) solution, thereby forming isolated nano-sized catalytic metal particles 33a. Here, the wet etching process used to form isolated nano-sized catalytic metal particles 33a can be performed at a low temperature.

This embodiment takes a horizontal thermal chemical vapor deposition (TCVD) apparatus as an example to grow the catalytic metal particles 33a and the carbon nanotubes. However, a vertical TCVD apparatus, an in-line TCVD apparatus, and a conveyer-type TCVD apparatus can also be used. Furthermore, a plasma CVD (PCVD) apparatus can be used instead of the horizontal TCVD apparatus. When a PCVD is used, etching can be performed at a low temperature, and control of reaction is easy.

An FED device using vertically-aligned carbon nanotubes according to the present invention as described above, is a two-electrode FED device having a simple structure, so that it can increase a manufacturing yield and can be manufactured to have a large area.

Also, since the FED device according to the present invention uses vertically well-aligned carbon nanotubes as emitter tips, a great amount of emission current can be obtained at a low operating voltage, for example, at 3V/µm or less. Furthermore, the FED device according to the present invention provides excellent luminous efficiency and high reliability since it has a high density of tips per unit area.

## Claims

1. A field emission display device comprising:
a metal film for use as a cathode formed on a lower substrate;
carbon nanotubes for use as emitter tips being vertically aligned on the metal film;
a spacer installed on the metal film; and
an upper substrate formed on the spacer to which a transparent electrode and a fluorescent layer are attached.

2. A field emission display device as claimed in claim 1 wherein the lower substrate is formed of glass, quartz, silicon or alumina (Al₂O₃).

3. A field emission display device as claimed in claim 1 or 2 wherein the metal film is formed of chrome, titanium, tungsten or aluminum.

4. A field emission display device as claimed in any preceding claim wherein catalytic metal particles are formed on the metal film and then the carbon nanotubes for use as emitter tips are grown on the catalytic metal particles by chemical vapor deposition.

5. A method for manufacturing a field emission display device comprising:
forming a metal film for use as a cathode on a lower substrate;
vertically aligning and growing carbon nanotubes on the metal film;
installing a spacer on the metal film; and
installing on the spacer an upper substrate to which a transparent electrode and a fluorescent material are attached.

6. A method as claimed in claim 5 wherein the lower substrate is formed of glass, quartz, silicon or alumina (Al₂O₃).

7. A method as claimed in claim 5 or 6 wherein the metal film is formed of chrome, titanium, tungsten or aluminum.

8. A method as claimed in any of claims 5 to 7 wherein the step of vertically aligning and growing the carbon nanotubes comprises:
forming a catalytic metal film on the metal film;
forming isolated nano-sized catalytic metal particles by etching the surface of the catalytic metal film; and
vertically growing a carbon nanotube for use as an emitter tip on each of the isolated catalytic metal particles using a chemical vapor deposition method using a carbon source gas.

9. A method as claimed in claim 8 wherein a thermal chemical vapor deposition method or a plasma chemical vapor deposition method is used to form the catalytic metal particles and to grow carbon nanotubes.

10. A method as claimed in claim 8 or 9 wherein the carbon source gas is a gas selected from the group consisting of an acetylene gas, an ethylene gas, a propylene gas, a propane gas and a methane gas.

11. A method as claimed in any of claims 8 to 10 wherein the surface of the catalytic metal film is etched by a gas selected from the group consisting of an ammonia gas, a hydrogen gas and a hydride gas, or by a hydrogen fluoride solution.

12. A method as claimed in any of claims 8 to 11 wherein the catalytic metal film is formed of cobalt, nickel, iron, yttrium or an alloy of two or more of these metals.
